# FASCICULE DE BREVET EUROPEEN

(11) **EP 0 598 865 B1**
(45) Date de publication et mention de la délivrance du brevet: **21.01.1998**
(21) Numéro de dépôt: 93909748.1
(22) Date de dépôt: 27.05.1993
(51) Int. Cl.: G07C 1/10, H04M 3/42

(54) **DISPOSITIF DE GESTION DE TEMPS DE PRESENCE ET/OU DE TEMPS DE TRAVAIL**
ANWESENDHEITS- UND/ODER ARBEITSZEITERFASSUNGSSYSTEM
DEVICE FOR MANAGING THE PRESENCE TIME AND/OR WORKING TIME

(30) Priorité: 01.06.1992 CH 1750/92
(43) Date de publication de la demande: 01.06.1994
(73) Titulaire: PADILLA, Fabian-José, 1417 Essertines-sur-Yverdon (CH)
(72) Inventeur: CURTY, Denis-Olivier, CH-1400 Yverdon (CH); PADILLA, Fabian-José, CH-1417 Essertines-sur-Yverdon (CH)
(74) Mandataire: Micheli & Cie
(86) Numéro de dépôt international: CH9300139
(87) Numéro de publication internationale: WO9324904

(56) Documents cités:
- EP-A- 0 185 445
- EP-A- 0 346 568
- EP-A- 0 365 200
- EP-A- 0 392 141
- WO-A-90/04300
- PATENT ABSTRACTS OF JAPAN vol. 13, no. 551 (E-857) 8 December 1989; & JP,A,1 228 363 (FUJITSU) 12 September 1989
- PATENT ABSTRACTS OF JAPAN vol. 17, no. 77 (M-1214) 25 February 1992; & JP,A,3 264 254 (FUJITSU) 25 November 1991

## Description

La présente invention concerne un dispositif de gestion de temps de présence ou de temps de travail à imputer au crédit ou au débit d'un dossier ou d'un mandat en cours de travail. Les dispositifs connus permettant de contrôler les temps de travail ou les temps de présence des employés d'une entreprise se présentent sous la forme de la pointeuse traditionnelle qui permet à l'introduction d'un support en papier, généralement sous forme d'une carte, d'imprimer la date et l'heure à laquelle on effectue cette manipulation. D'autres dispositifs se présentent sous la forme d'un dispositif de lecture d'un support, comme un badge magnétique par exemple. Ce dispositif de lecture transmet des informations telles que l'identification du porteur du badge enregistrées sur ce support ainsi que la date et l'heure à laquelle on introduit le badge dans le système de lecture, par l'intermédiaire de moyens de communication, vers un système de gestion électronique.

Le brevet européen EP-0 117 298 divulgue un dispositif permettant le contrôle d'un horaire flexible à l'aide d'un appareil téléphonique connecté à une installation téléphonique à commande centrale, dans lequel l'appareil téléphonique est muni d'un dispositif d'entrée, d'un dispositif d'horloge et d'une mémoire intermédiaire. Dans ce dispositif, l'utilisateur, après avoir actionné le dispositif d'entrée provoque le chargement dans la mémoire intermédiaire des informations de temps actuelles ainsi que l'identification de l'utilisateur, cette dernière étant mémorisée soit dans une mémoire morte à l'intérieur de l'appareil téléphonique, soit sur une carte magnétique que l'utilisateur introduit dans le dispositif d'entrée de l'appareil téléphonique. Tous les appareils téléphoniques participant au contrôle d'horaire flexible sont ensuite commandés journellement à partir de l'installation téléphonique centrale afin que les informations contenues dans les mémoires intermédiaires des appareils téléphoniques soient transférées par la ligne de communication vers l'installation téléphonique centrale pour permettre un traitement ultérieur.

Les inconvénients liés à ces systèmes existants sont dans le cas d'une pointeuse mécanique la gestion fastidieuse des informations imprimées sur les cartes et dans le cas d'un système à badge, les coûts d'installation d'un tel dispositif. De plus ces dispositifs sont généralement centralisés ce qui présente des inconvénients évidents dans le cas d'une disposition géographique disséminée de l'entreprise. Les inconvénients du dispositif décrit dans le brevet européen mentionné ci-dessus sont principalement dûs au fait qu'il faut modifier chaque appareil téléphonique participant au contrôle horaire et que la mise à jour des données ne se fait pas en temps réel mais une fois par jour.

On connaît encore du document WO-A-90/04300 un système de supervision à distance qui permet la supervision automatique de tâches devant être accomplies sur plusieurs sites géographiquement distants. Ce dispositif comporte une unité d'interface connectée à une ligne téléphonique capable d'activer cette dernière en réponse à un appel entrant. L'unité d'interface convertit les signaux multifréquence à deux tons (DTMF) générés par pression sur les touches de l'appareil téléphonique appelant en un code numérique. L'unité d'interface est également couplée à une unité de contrôle qui comporte une mémoire, une horloge interne en temps réel et une unité de calcul. La mémoire contient une table associant à un code numérique des données temporelles qui correspondent au délai de déclenchement d'une alarme si aucune action n'a été entreprise. A réception d'un appel sur la ligne téléphonique, l'unité d'interface convertit les signaux DTMF en un code numérique, puis transmet le code correspondant à l'unité de contrôle qui compare l'heure de l'appel avec les données stockées dans la mémoire. Si les données de temps divergent, l'unité de contrôle génère une alarme sous la forme d'un message imprimé ou affiché sur un périphérique connecté à cette dernière. Ce système de surveillance à distance ne permet pas d'échange d'informations ou de confirmation vers l'utilisateur.

La présente invention a pour but d'obvier les inconvénients cités ci-dessus en offrant un dispositif interactif d'acquisition, d'interrogation et de gestion de temps de présence et/ou de temps de travail à imputer à un dossier ou à un mandat donné, simple, économique et ne nécessitant pas une installation centralisée et coûteuse et permettant une saisie décentralisée des informations à traiter.

Le dispositif se distingue par les caractéristiques énumérées à la revendication 1.

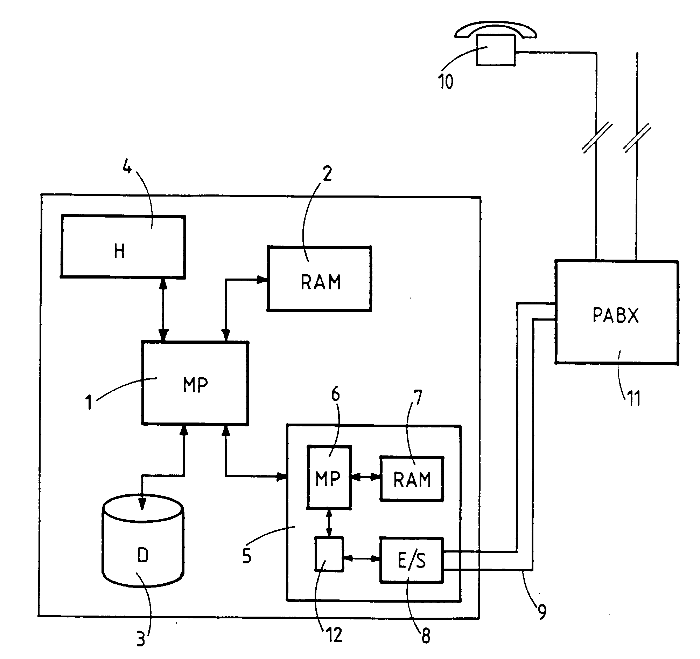

Le dessin annexé illustre schématiquement et à titre d'exemple une forme d'exécution du dispositif selon la présente invention représenté sous forme d'un schéma bloc.

Le dispositif illustré se compose d'au moins un calculateur comportant une unité centrale généralement sous la forme d'un calculateur à micro-processeur 1, une mémoire vive 2 (RAM) et une mémoire de masse 3 comme un disque magnétique par exemple, ainsi qu'un circuit d'horloge interne 4. Il comporte en outre un interface d'entrée-sortie de type vocal 5 qui est également muni d'une unité de calcul à micro-processeur 6 et d'une mémoire vive 7. Cet interface vocal 5 est relié d'une part à l'unité centrale 1, et peut donc de ce fait échanger des informations bi-directionellement avec cette dernière et d'autre part par l'intermédiaire d'un ou plusieurs interfaces téléphoniques 8, permettant de maintenir une communication téléphonique, à une ou plusieurs lignes de communication téléphonique 9. L'interface vocal 5 est encore muni de circuits 12 capables de convertir des signaux analogiques en des signaux numériques et réciproquement. On notera qu'un micro-ordinateur standard équipé d'une carte vocale additionnelle comme une carte PIKA AVA 4B par exemple peut parfaitement être utilisé pour réaliser les fonctions du dispositif selon la présente invention. La ligne de communication 9 est reliée soit directement à un appareil téléphonique standard 10 ou à un central téléphonique 11 privé ou non. On notera que l'appareil téléphonique 10 ainsi que le central 11 ne nécessitent aucune modification, de ce fait n'importe quel appareil téléphonique à impulsion, à fréquence vocale ou numérique peut être utilisé.

Le dispositif fonctionne comme suit. L'utilisateur décroche le combiné de l'appareil téléphonique 10 et compose le numéro d'appel du dispositif dans le cas ou ce dernier est connecté à un central téléphonique privé. Dans le cas d'une connexion directe, l'utilisateur est immédiatement connecté au dispositif selon l'invention. Le circuit téléphonique 8 de l'interface vocal 5 détecte un appel entrant sur la ligne de communication 9, décroche et maintient la ligne téléphonique, puis il notifie à l'unité de calcul 6 qu'un appel entrant est arrivé. L'unité de calcul 6 envoie à son tour un signal déterminé à l'unité centrale 1 qui transfère de la mémoire de masse 3 vers la mémoire 7 de l'interface vocal 5 un message vocal digitalisé. L'unité de calcul 6 transfère le contenu de la mémoire 7 vers le circuit convertisseur digital/analogique 12 qui transforme ce message en un message vocal et l'envoie sur la ligne de communication 9 par l'intermédiaire de l'interface téléphonique 8. Ce message vocal invite l'utilisateur à introduire son identification. L'utilisateur, se servant du clavier ou du cadran de l'appareil téléphonique, compose son code d'identification personnel qui aura bien évidemment été enregistré préalablement dans la mémoire de masse 3. Le circuit téléphonique 8 et le circuit convertisseur 12 décrypte les impulsions ou les fréquences transmises par l'utilisateur et transmet ensuite l'identification de l'utilisateur sous forme numérique vers la mémoire vive 2. L'unité centrale 1 vérifie ensuite la validité de ce code d'identification en le comparant aux données préenregistrées dans la mémoire de masse 3. Si le code est valable, l'unité centrale 1 associe l'heure et la date de l'appel, fournie par l'horloge interne 4, au numéro d'identification reçu et les stocke dans la mémoire de masse 3. L'unité centrale 1 envoie alors un signal sous la forme d'un message vocal digitalisé, stocké dans la mémoire de masse 3, vers la mémoire 7 de l'interface vocal 5 qui le convertit grâce au circuit convertisseur 12 en un message vocal de confirmation et l'envoie sur la ligne de communication 9 puis interrompt la communication.

On notera que l'unité centrale 1, au moment où elle stocke les informations dans la mémoire de masse 3, peut en plus effectuer un traitement sur les informations ainsi acquises pour les présenter ultérieurement sous différentes formes.

L'exemple qui précède montre comment le dispositif permet de saisir une information simple, à savoir l'heure et la date à laquelle un utilisateur s'est connecté au dispositif. Il va de soi qu'en programmant de façon adéquate l'unité centrale 1 ainsi que l'unité de calcul 6, on peut toujours selon le même principe saisir des informations plus complexes par l'intermédiaire du poste téléphonique. En effet il suffit de programmer l'unité centrale 1 pour qu'elle exige l'introduction d'un code opératoire après l'identification de l'utilisateur. Ce code opératoire pourra après avoir été comparé à ceux préenregistrés dans la mémoire de masse 3 déclencher une succession de dialogues entre le dispositif et l'utilisateur. On peut citer par exemple la possibilité que le dispositif, après l'identification, demande à l'utilisateur d'introduire un numéro de dossier sur lequel on désire imputer un temps de travail. L'utilisateur entrera sur le clavier de son appareil téléphonique le numéro de dossier concerné puis le temps de travail qu'il désire imputer au débit ou au crédit de ce dossier. Le dispositif stockera dans sa mémoire de masse, le code de l'utilisateur, le numéro de dossier ainsi que le temps de travail. Dans une variante, l'utilisateur au moment ou il commence à travailler sur un dossier ou au moment ou il commence à utiliser une ressource de l'entreprise comme une machine par exemple, introduira le numéro de dossier ou le code correspondant à cette ressource, le dispositif se chargeant d'y associer les données de temps actuelles. Lorsque l'utilisateur a terminé de travailler sur ce dossier ou d'utiliser cette ressource, il rappellera le dispositif qui stockera dans sa mémoire de masse le numéro de dossier ou le code de la ressource et les données de temps actuelles, l'unité centrale 1 se chargeant dans ce cas de calculer la différence entre le temps de début et le temps de la fin du travail pour les imputer au dossier ou à la ressource concerné.

Dans le même ordre d'idée, l'utilisateur en introduisant un code opératoire approprié peut interroger le dispositif sur le temps travail qui a été imputé à un dossier particulier. L'utilisateur peut également interroger le dispositif sur l'état de ses heures de présence et éventuellement sur son capital vacances. Dans ce cas après la réception du code opératoire, l'unité centrale 1 interroge la mémoire de masse 3 pour collecter les informations existantes relatives à cet utilisateur et les transmet sous forme numérique à l'interface vocal 5 qui les convertit en un message vocal et les transmet sur la ligne de communication 9 comme décrit en détail précédemment.

On notera que le message de confirmation envoyé par l'unité centrale 1 peut être un simple message vocal digitalisé et stocké dans la mémoire de masse 3, comme décrit précédemment, mais ce message vocal de confirmation peut également être plus explicite. L'unité centrale 1 peut par exemple convertir les informations d'identification ainsi que les données de temps actuelles en leur équivalent en langage naturel codé numériquement. Ainsi le dispositif produira un message de confirmation vocal qui répète les données numériques saisies par l'utilisateur en leur équivalent prononcé en langage naturel.

Dans une autre variante, le message de confirmation émis par le dispositif peut comporter en plus d'un message vocal des signaux de contrôle qui peuvent être affichés sur un dispositif d'affichage, comme un écran à cristaux liquides (LCD), intégré dans le poste téléphonique. L'utilisateur dans ce cas reçoit en confirmation à la fois un message vocal et une confirmation visuelle des données saisies, ces dernières s'affichant sur l'écran LCD du poste téléphonique.

Ce dispositif permet donc d'une part de saisir des informations par l'intermédiaire d'un appareil téléphonique standard, et d'autre part de consulter les informations saisies à l'emplacement même de son lieu de travail. Ce qui est particulièrement remarquable dans ce dispositif est qu'il ne nécessite aucune modification dans le réseau téléphonique existant ni dans les appareils téléphoniques et qu'il permet une saisie suivie d'une confirmation sous la forme d'un message vocal. Il permet en outre d'interroger des données enregistrées préalablement par l'intermédiaire d'un poste téléphonique et de fournir une réponse sous forme d'un message vocal. En connectant des périphériques d'entrée/sortie comme un clavier, un écran et une imprimante à l'unité centrale 1, on est à même de représenter et de traiter les données contenues dans la mémoire de masse 3 du dispositif.

Dans une variante, le dispositif peut être muni d'un logiciel de reconnaissance de la parole qui permet de saisir les informations non plus à partir du clavier ou du cadran de l'appareil téléphonique mais en prononçant simplement les données dans le microphone de ce dernier.

On peut également prévoir un dispositif de sécurité invitant l'utilisateur à introduire un code de contrôle après son identification personnelle. Ceci peut également être réalisé dans le cas où le dispositif est équipé d'un logiciel de reconnaissance de la parole par comparaison du spectre vocal de l'utilisateur avec des empreintes vocales préenregistrées dans la mémoire de masse 3.

Il ressort de ce qui précède, que ce dispositif est extrêmement souple et qu'en rajoutant ou en modifiant les séquences d'instructions pilotant les différentes unités de calcul, on peut obtenir des fonctionnalités différentes.

Les fonctions du dispositif décrit ci-dessus sont réalisées au moyen d'un ensemble de composants discrets (unité de calcul, mémoire, circuit convertisseur etc..) mais peuvent bien évidemment être intégrées dans un dispositif unique intégrant l'ensemble des composants nécessaires.

## Revendications

1. Dispositif de gestion des temps de présence et/ou de travail à imputer à un événement ou à une tâche par l'intermédiaire d'un appareil téléphonique, comprenant un calculateur (1,2,3,4) comportant une unité centrale (1), une mémoire vive (2), une mémoire de masse (3), une horloge interne (4) ainsi qu'un interface vocal (5) comportant une unité de conversion de signaux analogiques en signaux numériques (12) et vice versa ainsi qu'un interface téléphonique (8), ledit interface vocal étant couplé au calculateur, caractérisé en ce que l'interface vocal (5) comporte une mémoire (7), une unité de calcul (6).

2. Installation comportant un dispositif selon la revendication 1, caractérisée par le fait que ce dernier est connecté directement à un poste téléphonique (10) à l'aide de moyens de communication (9).

3. Installation comportant un dispositif selon la revendication 1, caractérisée par le fait que ce dernier est connecté à un poste téléphonique (10) par l'intermédiaire d'un central téléphonique privé (11).

4. Procédé de saisie des temps de présence et/ou de travail à imputer à un événement ou à une tâche à l'aide d'un appareil téléphonique connecté à une installation téléphonique, en particulier un central téléphonique privé, elle même connectée à un dispositif selon la revendication 1, caractérisé en ce que lors de l'établissement d'une communication entre un utilisateur et le dispositif, celui-ci invite l'utilisateur, par un message vocal, à introduire des informations par le clavier, le cadran ou le microphone du poste téléphonique puis mémorise ces informations ainsi que les informations de temps actuelles provenant de son horloge interne et qu'il confirme enfin la saisie des informations par un message vocal.

5. Procédé selon la revendication 4, caractérisé en ce que après avoir introduit des informations d'identification, l'utilisateur introduit encore un code opératoire provoquant l'extraction des données relatives à cet utilisateur ou au dossier qu'il traite, et leur transmission à l'utilisateur sous la forme d'un message vocal.

6. Procédé selon la revendication 4 ou la revendication 5, caractérisé en ce que le message de confirmation émis par le dispositif comporte en plus du message vocal des signaux permettant l'affichage dudit message sur un dispositif d'affichage, en particulier un écran à cristaux liquides, intégré à l'appareil téléphonique.

7. Procédé selon l'une des revendications 4 à 6, caractérisé en ce que le message vocal de confirmation émis par le dispositif reproduit en langage naturel les données numériques saisies par l'utilisateur.

## Patentansprüche

1. Vorrichtung zur Erfassung der einem Vorgang oder einer Aufgabe zuzurechnenden Anwesenheits- und/oder Arbeitszeiten vermittels eines Fernsprechapparats mit einem eine Zentraleinheit (1), einen Direktzugriffsspeicher (2), einen Massenspeicher (3) und einen Zeitgeber (4) umfassenden Rechner (1, 2, 3, 4) sowie mit einer Sprachschnittstelle (5), die einen Analog-Digital- und Digital-Analog-Umsetzer (12) und eine Telefonschnittstelle (8) enthält, wobei die benannte Sprachschnittstelle an den Rechner angeschlossen ist, dadurch gekennzeichnet, dass diese Sprachschnittstelle (5) einen Speicher (7) und eine Recheneinheit (6) enthält.

2. Anlage mit einer Vorrichtung gemäss Anspruch 1, dadurch gekennzeichnet, dass letztere mit Hilfe von Übermittlungsorganen (9) direkt mit einer Sprechstelle (10) verbunden ist.

3. Anlage mit einer Vorrichtung gemäss Anspruch 1, dadurch gekennzeichnet, dass letztere über eine private Telefonzentrale (11) mit einer Sprechstelle (10) verbunden ist.

4. Verfahren zur Erfassung der einem Vorgang oder einer Aufgabe zuzurechnenden Anwesenheits- und/oder Arbeitszeiten mit Hilfe eines Fernsprechapparats, der an eine Telefonanlage und insbesondere eine private Telefonzentrale angeschlossen ist, wobei die Telefonanlage selbst mit einer Vorrichtung gemäss Anspruch 1 verbunden ist, dadurch gekennzeichnet, dass nach Herstellung einer Verbindung zwischen einem Benutzer und der Vorrichtung letztere den Benutzer durch eine gesprochene Nachricht auffordert, über die Tastatur, die Wählscheibe oder das Mikrophon der Sprechstelle Daten einzugeben, diese dann zusammen mit von ihrem Zeitgeber kommenden aktuellen Zeitangaben speichert und schliesslich die Datenerfassung durch eine gesprochene Nachricht bestätigt.

5. Verfahren gemäss Anspruch 4, dadurch gekennzeichnet, dass der Benutzer, nachdem er Kenndaten eingegeben hat, noch einen Bedienungsschlüssel eingibt, der das Herausziehen von diesen Benutzer oder die von ihm bearbeiteten Akten betreffenden Daten sowie deren Übermittlung an den Benutzer in der Form einer gesprochenen Nachricht bewirkt.

6. Verfahren gemäss Anspruch 4 oder Anspruch 5, dadurch gekennzeichnet, dass die von der Vorrichtung ausgegebene Bestätigungsnachricht über die gesprochene Nachricht hinaus Signale enthält, die es gestatten, diese Nachricht auf einer Anzeigevorrichtung, insbesondere auf einer in den Fernsprechapparat integrierten Flüssigkristallanzeige, darzustellen.

7. Verfahren gemäss einem der Ansprüche 4 bis 6, dadurch gekennzeichnet, dass die von der Vorrichtung ausgegebene gesprochene Bestätigungsnachricht die durch den Benutzer erfassten digitalen Daten in natürlicher Sprache wiedergibt.

## Claims

1. Device for managing presence time and/or working time to be imputed to an event or to a task thanks to a telephone set, comprising a calculator (1,2,3,4) including a central unit (1), a random access memory (2), a mass storage (3), an internal timing circuit (4) and a vocal interface (5) which further comprises a conversion unit for converting analogic signals into digital signals (12) and vice versa as well as a telephone interface (8), said vocal interface being coupled to the calculator, characterized in that the vocal interface (5) comprises a memory (7) and a calculating unit (6).

2. Installation comprising a device according to claim 1, characterized by the fact that the device is directly connected to a telephone set (10) by means of communication means (9).

3. Installation comprising a device according to claim 1, characterized by the fact that the device is connected to a telephone set (10) through a private branch exchange (11).

4. Method of aquiring presence time and/or working time to be imputed to an event or a task thanks to a telephone set connected to a telephone installation, more particulary a private branch exchange, itself connected to a device according to claim 1, characterized in that at the time of the setting up of a communication between a user and the device, said device prompts the user, by means of a vocal message, to introduce information thanks to the keyboard or the dial or the microphone of the telephone set and then stores in memory these information as well as actual time datas coming from its internal timer circuit and that it then confirms the input of information by means of a vocal message.

5. Method according to claim 4, characterized in that after having introduced identification information, the user further enters an operatory code provoking the extraction of datas concerning this user or a file being worked on, and the transmission of said datas to the user by means of a vocal message.

6. Method according to claim 4 or to claim 5, characterized in that the confirmation message sent by the device comprises in addition to the vocal message, signals allowing said message to be displayed on display device, more particularly a liquid crystal display integrated in the telephone set.

7. Method according to claims 4 to 6, characterized in that the confirmation vocal message sent by the device reproduces in natural language the numeric datas entered by the user.
